(19) Europäisches Patentamt
European Patent Office
Office européen des brevets

(11) Veröffentlichungsnummer: **0 445 409 A2**

# (12) EUROPÄISCHE PATENTANMELDUNG

(21) Anmeldenummer: **90124848.4**

(51) Int. Cl.[5]: **C08G 65/40**

(22) Anmeldetag: **20.12.90**

(30) Priorität: **07.03.90 DE 4007061**

(43) Veröffentlichungstag der Anmeldung:
**11.09.91 Patentblatt 91/37**

(84) Benannte Vertragsstaaten:
**DE FR GB IT**

(71) Anmelder: **BAYER AG**
**W-5090 Leverkusen 1 Bayerwerk(DE)**

(72) Erfinder: **Kumpf, Robert, Dr.**
**c/o Mobay Corporation, Mobay Road**
**Pittsburgh Pa 15205(US)**
Erfinder: **Wehrmann, Rolf, Dr.**
**Scheiblerstrasse 81**
**W-4150 Krefeld 1(DE)**
Erfinder: **Pielartzik, Harald, Dr.**
**Doerperhofstrasse 39**
**W-4150 Krefeld(DE)**
Erfinder: **Nerger, Dittmar, Dr.**
**c/o Mobay Corporation, Mobay Road**
**Pittsburgh Pa 15205(US)**

## (54) Estergruppen enthaltende aromatische Polyether.

(57) Die neuen Estergruppen enthaltenden aromatischen Polyether, die sich durch eine hohe Formstabilität auszeichnen, können zur Herstellung von Formkörpern aller Art verwendet werden. Darüber hinaus finden sie Verwendung zur Herstellung von Blockcopolymeren aus aromatischen Polyethersegmenten und Segmenten von anderen thermoplastische Polymeren.

EP 0 445 409 A2

Die Erfindung betrifft Estergruppen enthaltende aromatische Polyether, ein Verfahren zur Herstellung der aromatischen Polyether sowie die Verwendung der aromatischen Polyether zur Herstellung von Formkörpern aller Art und zur Herstellung von Blockcopolymeren aus aromatischen Polyethersegmenten und Segmenten von anderen thermoplastischen Polymeren.

Es ist bekannt, daß aromatische Polyether, z.B. Polyphenylenoxid, Polyethersulfone, Polyetherketone und Polyetheramide, hochwärmeformbeständige Polymere darstellen. Sie sind wenig oxidationsempfindlich, schwer entflammbar und besitzen ein hervorragendes mechanisches Eigenschaftsniveau. Teilkristalline Polyarylenether, z.B. Polyetheretherketone, weisen zudem eine große Chemikalien- und Lösemittelresistenz auf. Nachteilig ist jedoch, daß sie für bestimmte technische Anwendungsgebiete, z.B. als Membranmaterialien für spezielle Trennprobleme auf Grund ihrer fehlenden Funktionalität, kaum eingesetzt werden können. Außerdem ist eine chemische Modifizierung, z.B. die Herstellung von Blockcopolymeren, schlecht möglich wegen fehlender funktioneller Gruppen, z.B. Estergruppen.

Gegenstand der Erfindung sind nun Estergruppen enthaltende aromatische Polyether der Formel (I)

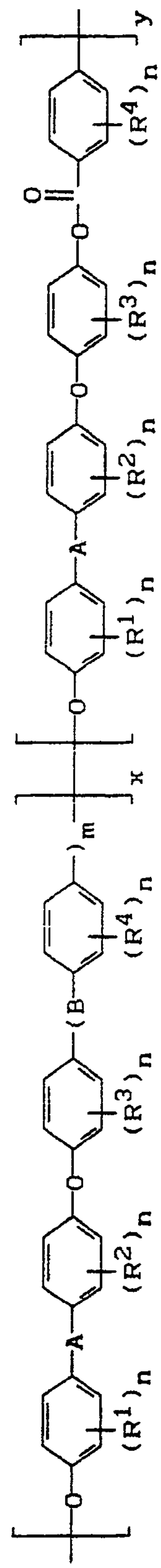

(I),

worin

R[1] bis R[4] gleich oder verschieden sind und für Halogen, vorzugsweise Fluor, Chlor und Brom, sowie Wasserstoff, $C_1$-$C_4$-Alkyl, vorzugsweise Methyl und Ethyl, $C_6$-$C_{12}$-Aryl, vorzugsweise Phenyl und Biphenyl, oder $C_7$-$C_{12}$-Aralkyl, vorzugsweise Methylphenyl und Ethylphenyl, stehen,

A für $SO_2$, CO, SO oder

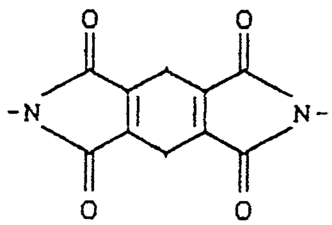

(II),

bevorzugt für CO und $SO_2$, steht,

B eine chemische Bindung, CO, O, S, $SO_2$,

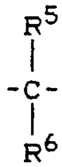

(III) oder

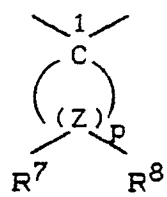

(IV)

bedeutet,
worin

$R^5$ und $R^6$
gleich oder verschieden sind und für Halogen, bevorzugt Fluor, Chlor und Brom, sowie Wasserstoff, $C_1$-$C_4$-Alkyl, bevorzugt Methyl und Ethyl, oder $C_5$-$C_{12}$-Cycloalkyl mit gegebenenfalls einem oder mehreren Alkylsubstituenten, wie Cyclopentyl, Cyclohexyl, Methylcyclopentyl und Methylcyclohexyl, stehen,

p
eine ganze Zahl von 4 bis 7, bevorzugt 4 oder 5, ist,

$R^7$ und $R^8$
für jedes Z individuell wählbar sind und unabhängig voneinander Wasserstoff oder $C_1$-$C_6$-Alkyl, bevorzugt H oder Methyl, bedeuten und

Z
Kohlenstoff bedeutet,
mit der Maßgabe, daß an mindestens einem Atom Z die Reste $R^7$ und $R^8$ gleichzeitig Alkyl sind,

n 0 oder eine ganze Zahl von 1 bis 4, vorzugsweise 0, 1 oder 2,

m 0 oder eine ganze Zahl von 1 bis 3, vorzugsweise 0, 1 oder 2, besonders bevorzugt 0 oder 1, bedeuten und

x und y im Verhältnis von 99,5 bis 50 Gew.-Teilen zu 0,5 bis 50 Gew.-Teilen, vorzugsweise 99,5 bis 70 Gew.-Teilen zu 0,5 bis 30 Gew.-Teilen, insbesondere 99,5 bis 80 Gew.-Teilen zu 0,5 bis 20 Gew.-Teilen, ganz besonders bevorzugt 99,5 bis 85 Gew.-Teilen zu 0,5 bis 15 Gew.-Teilen, pro Gesamtpolymer zueinander stehen.

In Formel (IV) sind bevorzugt an 1 bis 2 Atomen Z, insbesondere nur an einem Atom Z, $R^7$ und $R^8$ gleichzeitig Alkyl. Die Z-Atome in $\alpha$-Stellung zu dem Diphenyl-substituierten C-Atom (C-1) sind bevorzugt nicht Dialkyl-substituiert, dagegen ist die Alkyldisubstitution in $\beta$-Stellung zu C-1 bevorzugt.

Als bevorzugte Estergruppen enthaltende aromatische Polyether seien formelmäßig genannt:

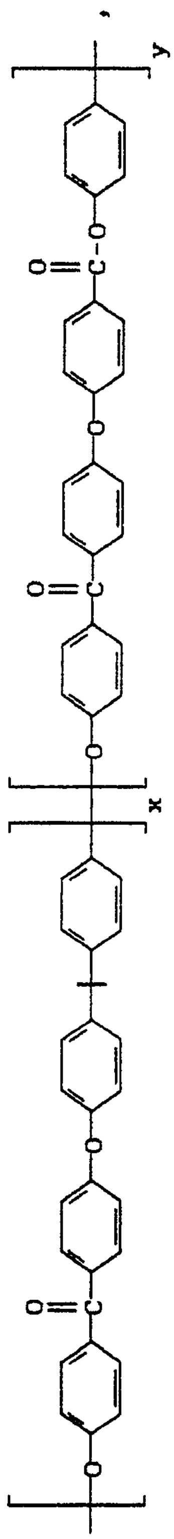

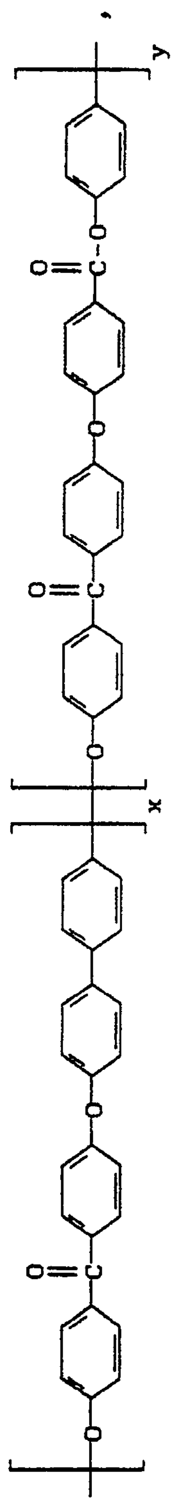

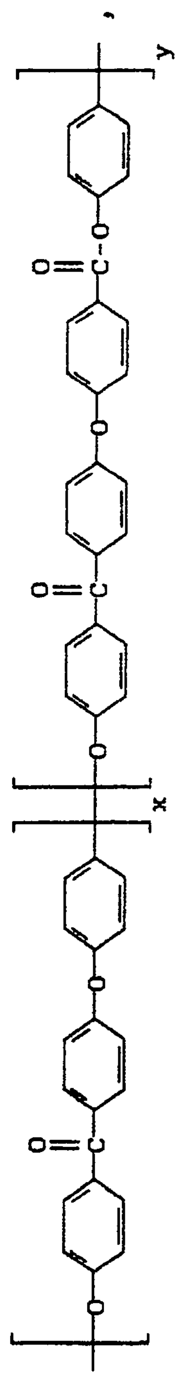

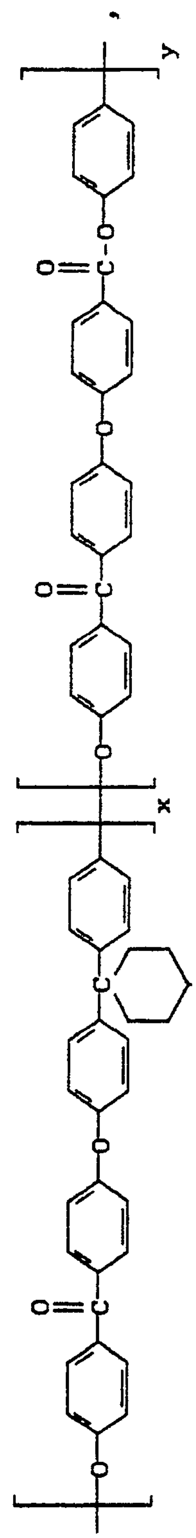

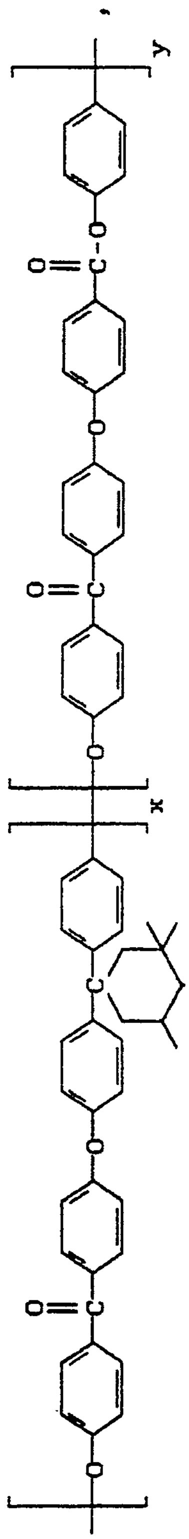

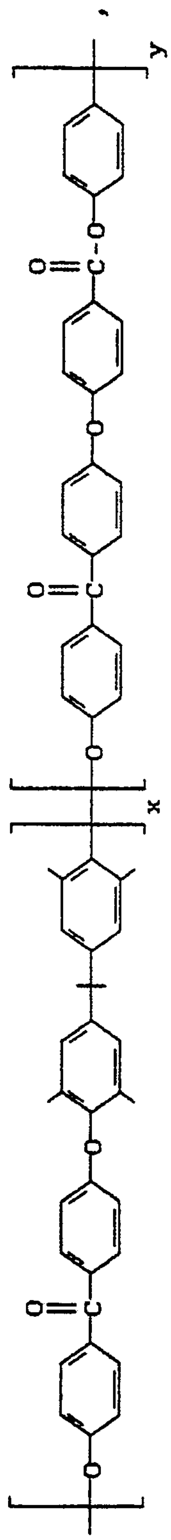

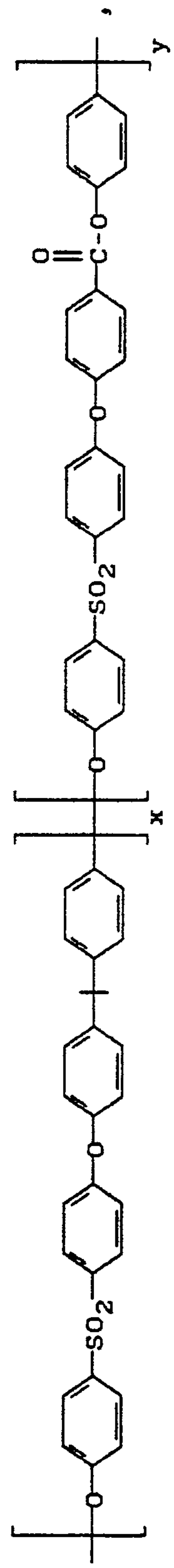

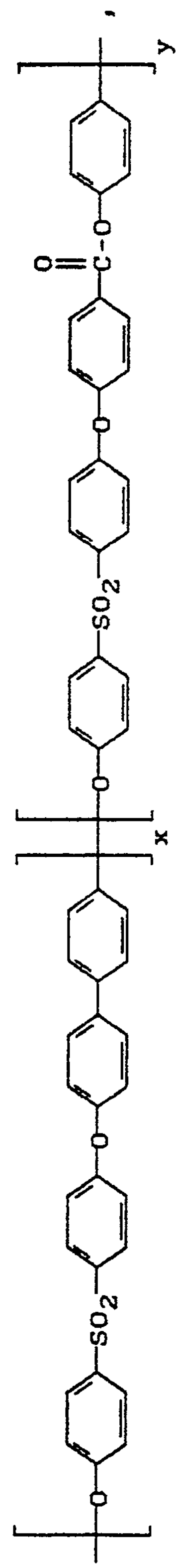

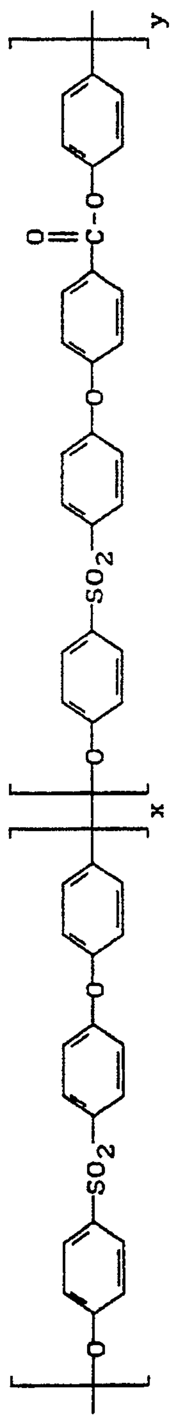

,

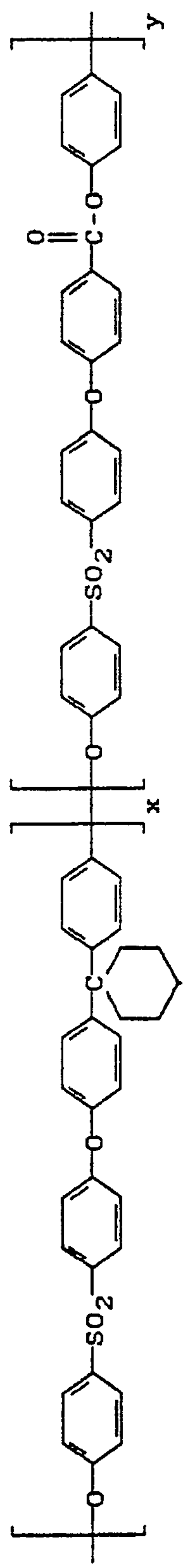

,

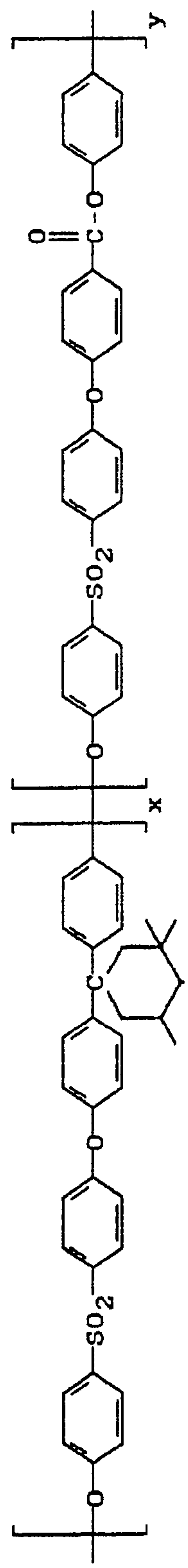

,

oder

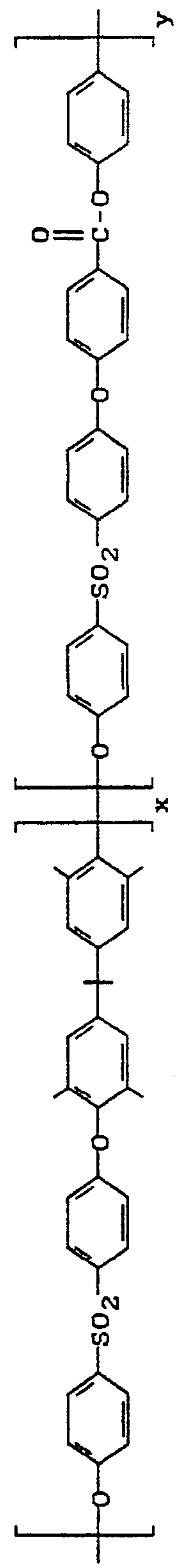

,

wobei

x und y die obengenannte Bedeutung besitzen.

Besonders hervorzuheben sind formelmäßig folgende neue Estergruppen enthaltende aromatische Polyether:

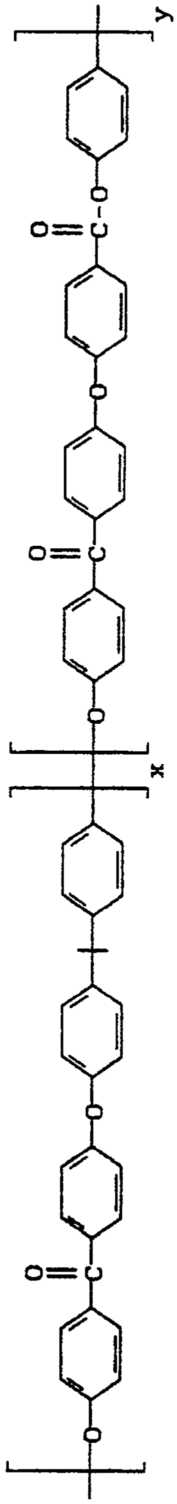
,

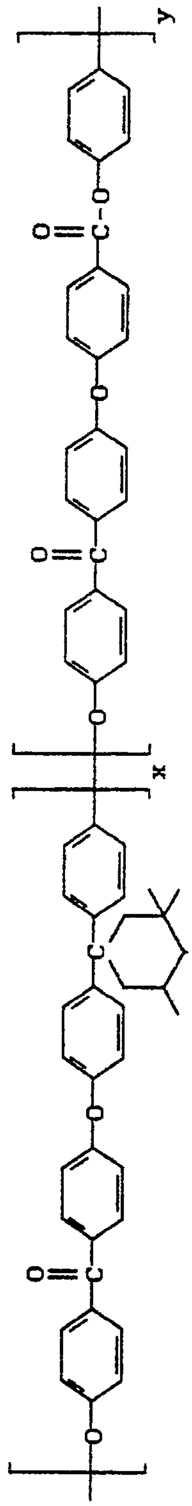
,

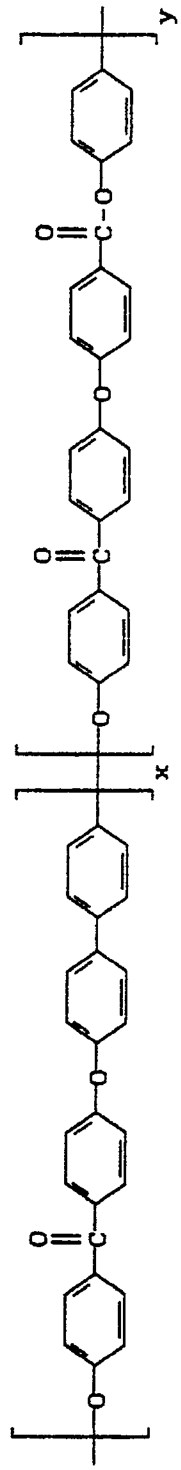
,

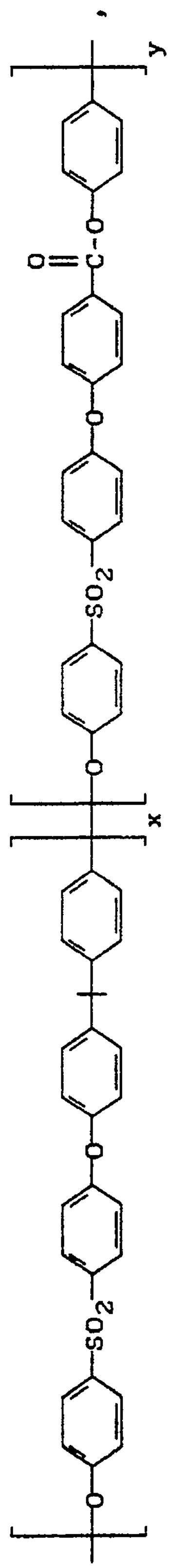

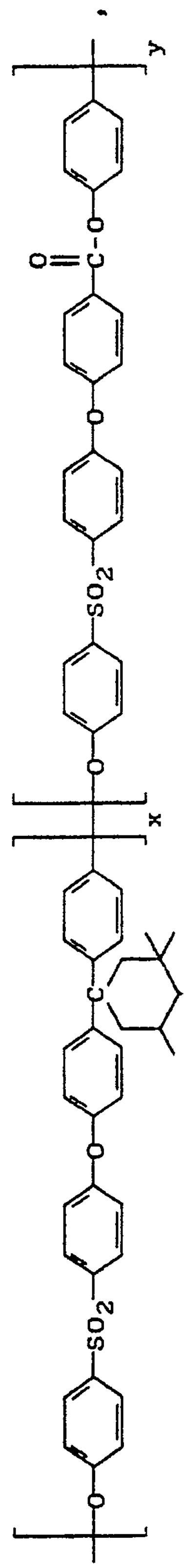

oder

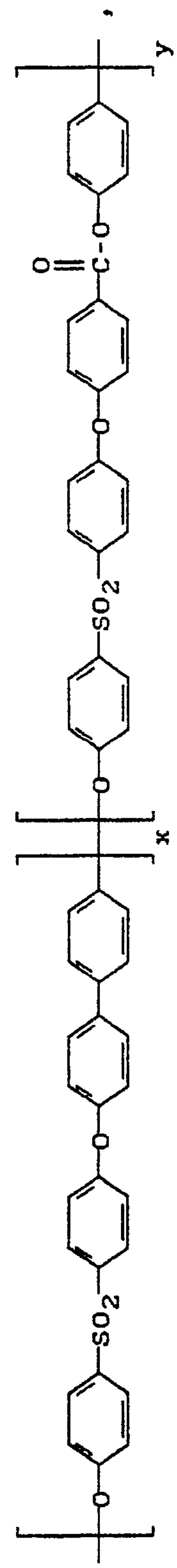

wobei
x und y die zuvor genannte Bedeutung besitzen.

Ein weiterer Gegenstand der Erfindung ist ein Verfahren zur Herstellung der neuen Estergruppen enthaltenden aromatischen Polyether der Formel (I)

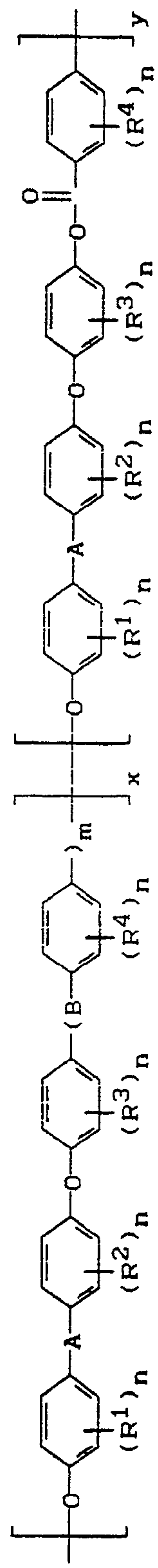

(I),

worin

R¹ bis R⁴ gleich oder verschieden sind und für Halogen, vorzugsweise Fluor, Chlor und Brom, sowie Wasserstoff, $C_1$-$C_4$-Alkyl, vorzugsweise Methyl und Ethyl, $C_6$-$C_{12}$-Aryl, vorzugsweise Phenyl und Biphenyl, oder $C_7$-$C_{12}$-Aralkyl, vorzugsweise Methylphenyl und Ethylphenyl, stehen,

A für $SO_2$, CO, SO oder

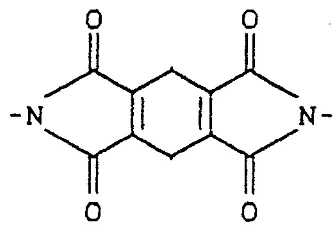 (II),

bevorzugt für CO und $SO_2$, steht,

B eine chemische Bindung, CO, O, S, $SO_2$,

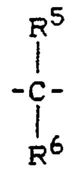 (III) oder 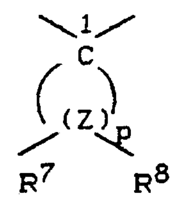 (IV)

bedeutet,

worin

$R^5$ und $R^6$

gleich oder verschieden sind und für Halogen, bevorzugt Fluor, Chlor und Brom, sowie Wasserstoff, $C_1$-$C_4$-Alkyl, bevorzugt Methyl und Ethyl, oder $C_5$-$C_{12}$-Cycloalkyl mit gegebenenfalls einem oder mehreren Alkylsubstituenten, wie Cyclopentyl, Cyclohexyl, Methylcyclopentyl und Methylcyclohexyl, stehen,

p

eine ganze Zahl von 4 bis 7, bevorzugt 4 oder 5, ist,

$R^7$ und $R^8$

für jedes Z individuell wählbar sind und unabhängig voneinander Wasserstoff oder $C_1$-$C_6$-Alkyl, bevorzugt H oder Methyl, bedeuten und

Z

Kohlenstoff bedeutet,

mit der Maßgabe, daß an mindestens einem Atom Z die Reste $R^7$ und $R^8$ gleichzeitig Alkyl sind,

n 0 oder eine ganze Zahl von 1 bis 4, vorzugsweise 0, 1 oder 2,

m 0 oder eine ganze Zahl von 1 bis 3, vorzugsweise 0, 1 oder 2, besonders bevorzugt 0 oder 1, bedeuten und

x und y im Verhältnis von 99,5 bis 50 Gew.-Teilen zu 0,5 bis 50 Gew.-Teilen, vorzugsweise 99,5 bis 70 Gew.-Teilen zu 0,5 bis 30 Gew.-Teilen, insbesondere 99,5 bis 80 Gew.-Teilen zu 0,5 bis 20 Gew.-Teilen, ganz besonders bevorzugt 99,5 bis 85 Gew.-Teilen zu 0,5 bis 15 Gew.-Teilen, pro Gesamtpolymer zueinander stehen.

das dadurch gekennzeichnet ist, daß aromatische Dihalogenide der Formel (V)

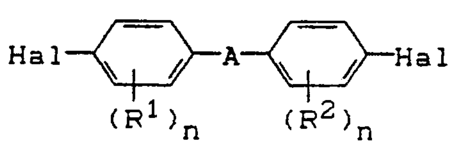 (V),

worin

$R^1$, $R^2$, A und n die zuvor genannte Bedeutung besitzen und

Hal für Fluor, Chlor oder Brom, vorzugsweise Fluor oder Chlor steht,

mit aromatischen Bisphenolen der allgemeinen Formel (VI)

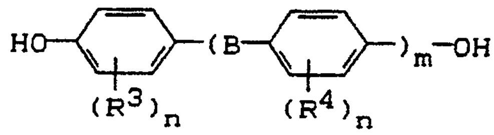 (VI),

worin

$R^3$, $R^4$, B, m und n die zuvor genannte Bedeutung besitzen,

und mit aromatischen Esterbisphenolen der allgemeinen Formel (VII)

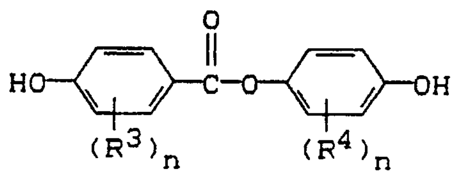 (VII),

worin

$R^3$, $R^4$ und n die zuvor genannte Bedeutung besitzen,

in Gegenwart von 1 bis 1,3 Äquivalenten basischer Katalysatoren, bezogen auf Dihydroxyverbindungen der allgemeinen Formeln (VI) und (VII), und in Gegenwart von dipolaren, aprotischen Lösungsmitteln der Formeln (VIII) und/oder (IX)

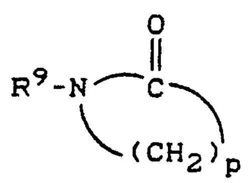 , $R^{10}-Q-R^{11}$ ,

(VIII) (IX)

in welchen

$R^9$, $R^{10}$ und $R^{11}$ gleich oder verschieden sind und für $C_1$-$C_{20}$-Alkyl, $C_5$-$C_7$-Cycloalkyl, bevorzugt Methyl, Ethyl und Propyl, sowie $C_6$-$C_{20}$-Aryl, bevorzugt Phenyl, stehen,

Q eine Sulfoxid- oder Sulfongruppe bedeutet und

p für die Zahlen 3, 4 oder 5, bevorzugt 3 oder 5, steht,

umgesetzt werden, wobei die Bisphenole der Formeln (VI) und (VII) im Verhältnis von 99,5-50:0,5-50 Gew.-Teilen, vorzugsweise 99,5-70:0,5-30 Gew.-Teilen, inbesondere 99,5-80:0,5-20 Gew.-Teilen und ganz besonders bevorzugt von 99,5-85:0,5-15 Gew.-Teilen, zueinander eingesetzt werden.

Die neuen Estergruppen enthaltenden aromatischen Polyether haben mittlere Molekulargewichte $\overline{M}w$ (Gewichtsmittel bestimmt durch Gelpermeationschromatographie (GPC) mit Polystyrol als Standard) von 560 bis 300 000, insbesondere von 1.000 bis 200 000 und speziell von 2.000 bis 100 000.

Die Umsetzung der aromatischen Dihalogenide mit den aromatischen Bisphenolen der angegebenen Formeln wird im allgemeinen in Gegenwart von 0,5 bis 50, bevorzugt 2 bis 20 Gew.-Teilen an polaren Lösungsmitteln der angegebenen Formeln, bezogen auf das Gesamtgewicht der Polyetherbildungskomponenten, durchgeführt.

Erfahrungsgemäß können die aromatischen Polyether bei Temperaturen von etwa 130 bis 320 °C, bevorzugt bei 145 bis 280 °C, und bei Drücken von 0,8 bis 10 bar, vorzugsweise 1 bis 3 bar, insbesondere bei atmosphärischem Umgebungsdruck, hergestellt werden.

Die Umsetzungsdauer beträgt im allgemeinen 1 bis 50 Stunden, vorzugsweise 2 bis 20 Stunden.

Beispiele für einzusetzende aromatische Dihalogenverbindungen der Formel (V) sind 4,4'-Dichlordiphenylsulfon, 4,4'-Difluordiphenylsulfon, 4,4'-Difluorbenzophenon und/oder 4,4'-Dichlorbenzophenon.

Geeignete Diphenole der Formel (VI) sind z.B.

Hydrochinon,

Methylhydrochinon,

Phenylhydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole
sowie deren kernalkylierte und kernhalogenierte Verbindungen.

Diese und weitere geeignete andere Diphenole (III) sind z.B. in den US-PS 3 028 365, 2 999 835, 3 148 172, 2 069 560, 3 275 601, 2 991 273, 3 271 367, 3 062 781, 2 970 131, 2 069 573 und 2 999 846, in den deutschen Offenlegungsschriften 1 570 703, 2 063 050, 2 063 052, 2 211 095 sowie der deutschen Patentanmeldung P 38 32 396.6, der französichen Patentschrift 1 561 518, der JP-OS 62039/86, 62040/86 und 105550/86 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4 Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan,
4,4'-Dihydroxydiphenylsulfon,
1,6-, 1,7-, 2,6-, 2,7-Naphthaindol,
4,4'-Dihydroxydiphenylsulfon und
4,4'-Dihydroxybenzophenon.

Als weitere Bisphenolkomponenten bei der Herstellung der Estergruppen enthaltenden aromatischen Polyether sind 3,3,5-Trimethyl-1,1-bis-(4-hydroxyphenyl)-cyclohexan, 3,3,5-Trimethyl-1,1-bis-(4-hydroxy-3,5-dimethylphenyl)-cyclohexan, 3,3,5,5-Tetramethyl-1,1-bis-(4-hydroxyphenyl)-cyclohexan, 3,3,5,5-Tetramethyl-1,1-bis-(4-hydroxy-2,5-dimethylphenyl)-cyclohexan, 3,3,5-Trimethyl-1,1-bis-(4-hydroxyphenyl)-cyclopentan und 3,3,5-Trimethyl-1,1-bis-(4-hydroxy-3,5-dimethylphenyl)-cyclopentan geeignet.

Als dipolare, aprotische Lösungsmittel der Formel (VIII) können beispielsweise N-Methylpyrrolidon und/oder N-Methylcaprolactam eingesetzt werden.

Als Lösungsmittel der Formel (IX) können eingesetzt werden Dimethylsulfoxid, Diphenylsulfon und/oder Sulfolan.

Als geeignete basische Katalysatoren sind zu erwähnen die (Erd)Alkalisalze, wie Natriumhydroxid, Kaliumhydroxid, Natriummethanolat, Kaliumcarbonat und/oder Kaliumhydrogencarbonat.

Vor der erfindungsgemäßen Umsetzung (Kondensation) kann das Reaktionsgemisch azeotrop entwässert werden. Diese Verfahrensweise birgt einige Vorteile. Zur Entwässerung wird ein übliches Schleppmittel, wie Toluol, Mesitylen, Chlorbenzol, Dichlorbenzol und/oder andere bekannte Schleppmittel, dem Reaktionsgemisch zugesetzt. Die Umsetzung wird bevorzugt unter Inertgasatmosphäre, beispielsweise in Gegenwart

von Stickstoff und/oder Argon, durchgeführt. Mit fortschreitender Kondensation wird die Reaktionstemperatur sukzessive erhöht, vorzugsweise auf Temperaturen im Bereich von 145 bis 280° C. Dabei wird das Wasser und das zugegebene Schleppmittel aus dem Reaktionsgemisch entfernt. Ein allmählicher Viskositätsanstieg kann beobachtet werden.

Das Polymere wird anschließend aus dem Reaktionsgemisch durch eine übliche Fällreaktion, z.B. durch Zugabe von Alkoholen oder Alkohol/Wasser-Gemischen, z.B. durch Zugabe von Methanol, Ethanol oder Isopropanol, gefällt.

Gegebenenfalls kann das Reaktionsgemisch, insbesondere wenn sehr hochviskose Lösungen vorliegen, beispielsweise mit dem polaren Reaktionslösungsmittel oder einem anderen Lösungsmittel für den Polyether verdünnt und dann filtriert werden. Die Isolierung des Polymeren gelingt dann in üblicher Weise.

Die erfindungsgemäßen aromatischen Polyether können zur Herstellung von Formkörpern aller Art verwendet werden. Solche Formkörper können beispielsweise hergestellt werden durch Extrusion, Spritzgießen, Sintern oder Verpressen in bekannter Weise. Die Estergruppen enthaltenden aromatischen Polyether sind überall dort einsetzbar, wo hohe Formstabilität gefordert ist, beispielsweise auf dem Gebiet der Elektrotechnik und Elektronik, dem Fahrzeugbau, in der Luft- und Raumfahrt, für Sportgeräte sowie für Funktionsteile und Geschirre für Mikrowellenherde. Des weiteren zur Herstellung von sterilisierbaren medizinischen Geräten, Kaffeemaschinenteilen, Eierkochern, Heißwasserbehältern, Heißwasserleitungen und -pumpen sowie Haartrocknern.

Den erfindungsgemäßen Polyethern können noch übliche Additive, wie Weichmacher, Entformungsmittel, Stabilisatoren, wie UV-Absorber oder Antioxidantien, Intumeszenzhilfsmittel (Flammschutzmittel), Verstärkungsfasern, wie Glasfasern, Kohlenstoffasern oder Aramidfasern, Füllstoffe, anorganische und organische Pigmente, keramische Grundstoffe, sowie Ruß zugesetzt werden. Die Mengen der zuzusetzenden Additive können leicht durch Vorversuche bestimmt werden und hängen u.a. vom jeweiligen Verwendungszweck der Formkörper ab. Üblich sind Mengen bis zu 80, bevorzugt bis zu 60, besonders bevorzugt bis zu 50 Gew.-%, bezogen auf das Gesamtpolymer. Es ist zweckmäßig, die Additive vor der Verarbeitung den erfindungsgemäßen Polyethern zuzusetzen.

Weiterhin können die erfindungsgemäßen Ether zur Herstellung von Blockcopolymeren dienen, die aus aromatischen Polyethersegmenten und anderen Segmenten von thermoplastischen Polymeren bestehen.

Beispiele für solche Blockcopolymere-Systeme sind segmentierte Blockcopolymere auf Basis von erfindungsgemäßen aromatischen Polyethern und (Co)Polyestern, (Co)Polycarbonaten, (Co) Polyamiden und (Co)Polyesteramiden. Die genannten Polyester, Polycarbonate, Polyamide und Polyesteramide sind zum Beispiel beschrieben in Encylopedia of Polymer Science and Engineering, 2nd Edition, Wiley Interscience, John Wiley and Sons, New York.

Von besonderem Interesse sind dabei auch Blockcopolymere aus aromatischen Polyether- und flüssigkristallinen Polyestersegmenten.

Die Herstellung der oben beschriebenen Blockcopolymeren kann beispielsweise erfolgen durch Umsetzung der Estergruppen enthaltenden aromatischen Polyether der Formel (I) mit den jeweiligen Grundbausteinen der zuvor genannten thermoplastischen Polymeren. Als mögliche Verfahren zur Herstellung der segmentierten Blockcopolymeren werden beispielsweise die Schmelzkondensation oder die Kondensation in homogener Lösung genannt.

Schließlich ist es ebenfalls möglich, die Schmelzumesterung von hochmolekularen Thermoplasten der obigen Art mit den erfindungsgemäßen Estergruppen enthaltenden aromatischen Polyether auf einem Extruder durchzuführen. Solche Verfahren sind u.a. beschrieben in Encyclopedia of Polymer Science and Engineering, 2nd Edition, Wiley Interscience, John Wiley and Sons, New York.

## Beispiele

### Beispiel 1 (Polyether 1-3)

(Darstellung eines Estergruppen enthaltenden aromatischen Polyethers, Polyether 1)

100 g (458,3 mmol) 4,4'-Difluorbenzophenon, 99,65 g (436,5 mmol) Bisphenol A (BPA), 5,02 g (21,8 mmol) 4-Hydroxybenzoesäure-4'-hydroxyphenylester (EBP) (Molverhältnis 20:1/BPA:EBP) und 69 g wasserfreies $K_2CO_3$ werden in einer Mischung aus 500 ml trockenem N-Methylcaprolactam (NMC) und 200 ml trockenem Toluol in einem 2 1-Dreihalskolben mit Rührmotor, Innenthermometer und Wasserabscheider vorgelegt. Die Lösung wird über Nacht bei etwa 155° C entwässert. Anschließend werden Toluol und evtl. Reste Wasser schrittweise abgenommen, so daß die Innentemperatur auf 180° C ansteigt. Bei dieser Temperatur wird 5 h nachgerührt, bevor die Temperatur auf 185-190° C erhöht und 2 h gehalten wird. Das

Produkt wird durch Eingießen der Reaktionslösung in 5 1 Methanol/Wasser (1:1) ausgefällt. Der Feststoff wird abgesaugt, in Methylenchlorid aufgenommen, mit verdünnter HCl neutral gewaschen, in Methanol gefällt und bei 80 ° C im Wasserstrahlvakuum getrocknet:

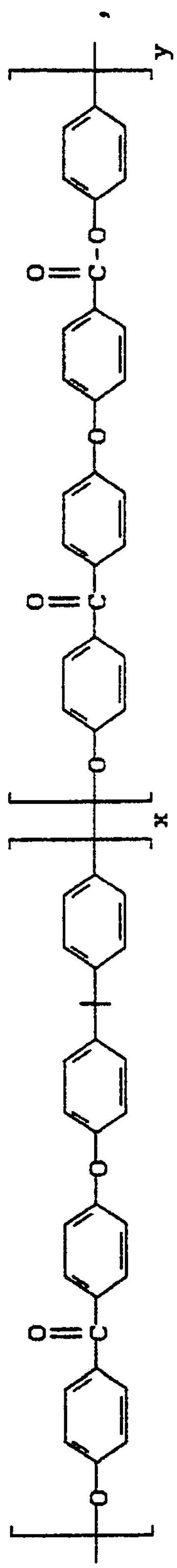

wobei sich x und y aus den Mengen der Einsatzverbindungen ergeben.

Molgewicht (GPC): $\overline{M}w$ = 21.700

IR: 1730 $cm^{-1}$ (Esterbande; Bande des monomeren Esterbisphenols bei 1690 $cm^{-1}$)
1650 $cm^{-1}$ (Carbonylbande der Benzophenoneinheit) Tg (DSC): 155 °C
Auf analoge Weise wurden die Polyether 2 und 3 hergestellt:

| | eingesetztes Molverhältnis BPA/EBP: | $\overline{M}w$ (GPC) |
|---|---|---|
| Polyether 2 | 10:1 | 18 900 |
| Polyether 3 | 15:1 | 30 700 |

Beispiel 2 (Polyether 4)

12,7 g (50 mmol) Difluordiphenylsulfon, 4,65 g (25 mmol) 4,4'-Dihydroxydiphenyl, 5,75 g (25 mmol) 4-Hydroxybenzoesäure-4'-hydroxyphenylester und 7 g (52 mmol) trockenes $K_2CO_3$ werden in einem Dreihalskolben mit Rührer, Innenthermometer und Wasserabscheider mit 100 ml NMP und 50 ml Toluol vorgelegt und 5,5 Stunden auf eine Temperatur von 150-153 °C erwärmt. In dieser Zeit wird das Wasser azeotrop ausgekreist. Die Innentemperatur wird kontinuierlich auf 176 °C erhöht und bei dieser Temepratur 6 Stunden gehalten. Nach Abkühlung auf Raumtemperatur wird die Lösung filtriert, mit 5 ml Essigsäure versetzt, das Polymer in 2 1 Methanol ausgefällt, isoliert und 1 Stunde in siedendem Wasser gerührt. Das Produkt wird durch Filtration gewonnen und im Vakuum getrocknet:
Molgewicht (GPC): $\overline{M}w$ = 22.300
IR: 1735 $cm^{-1}$
Tg (DSC): 213 °C

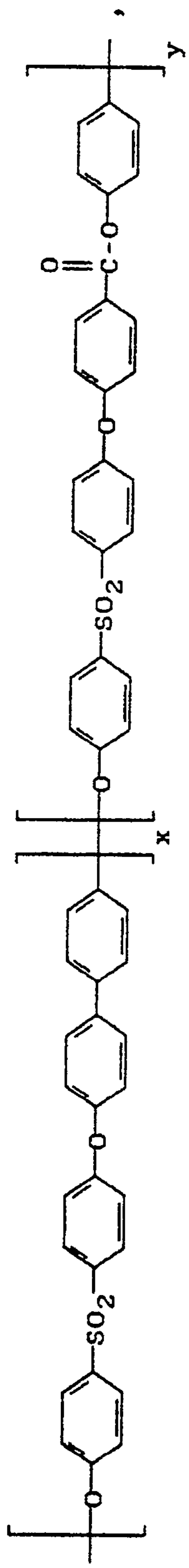

wobei sich x und y aus den Mengen der Einsatzverbindungen ergeben.

Beispiel 3 (Polyether 5)

21,82 g (100 mmol) 4,4'-Difluorbenzophenon, 9,31 g (50 mmol) 4,4'-Dihydroxydiphenyl, 11,5 g (50

mmol) 4-Hydroxybenzoesäure-4'-hydroxyphenylester und 14 g (145 mmol) trockenes $K_2CO_3$ werden in einem Dreihalskolben mit Rührer, Innenthermometer mit 200 ml NMP und 100 ml Toluol vorgelegt und 4 Stunden auf eine Temperatur von 150-153 °C erwärmt. In dieser Zeit erfolgt die azeotrope Wasserauskreisung. Die Innentemperatur wird kontinuierlich erhöht und 8 Stunden bei 180 °C gehalten. Nach Abkühlung auf Raumtemperatur wird die Lösung filtriert, mit 5 ml Essigsäure versetzt, das Polymer in 2 l Methanol ausgefällt, isoliert und 1 Stunde in siedendem Wasser gerührt. Das Produkt wird durch Filtration gewonnen und im Vakuum getrocknet.

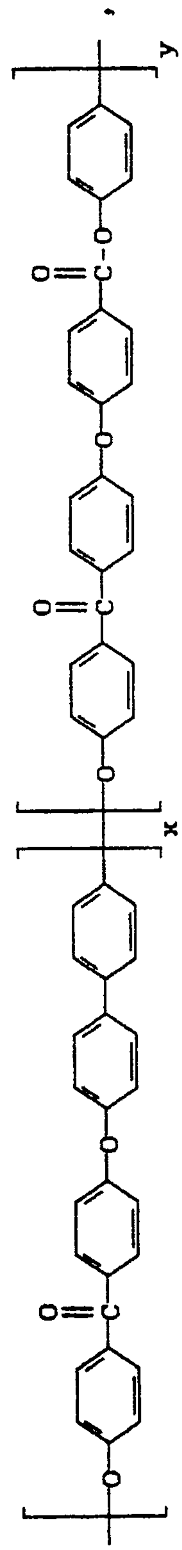

wobei sich x und y aus den Mengen der Einsatzverbindungen ergeben.

Beispiel 4

Herstellung der erfindungsgemäßen Blockcokondensate:
In ein 1 l-Planschliffgefäß mit Planschliffdeckel, Rührer, Stickstoffeinleitung und einem Destillationsaufsatz, der mit einem Kühler verbunden war, wurden die zur Herstellung der LC-Polymerblöcke erforderlichen Bausteine
p-Hydroxybenzoesäure,
Hydrochinon,
4,4-Dihydroxydiphenyl,
Terephthalsäure,
Isophthalsäure,
Acetanhydrid sowie
Magnesiumacetat (wasserfrei)
sowie einer der Polyether 1, 2 oder 3
in den in Tabelle 1 zusammengefaßten Verhältnissen eingewogen und in einer dem Fachmann bekannten Fahrweise (z.B. Europäische Patentschrift 0 165 399) der Schmelzkondensation unterzogen.

Unter den Reaktionsbedingungen bildeten sich Blockcopolymere aus flüssigkristallinen Polyester- und aromatischen Polyetherblöcken.

Tabelle 1

| | 1 | 2 | 3 | 4 | 5 |
|---|---|---|---|---|---|
| p-Hydroxybenzoesäure (g) | 207 | 103,5 | 310,5 | 207 | 103,5 |
| 4,4'-Dihydroxydiphenyl (g) | 93 | 46,5 | 139,7 | 93 | 46,5 |
| Terephthalsäure (g) | 49,8 | 24,9 | 74,7 | 49,8 | 24,9 |
| Isophthalsäure (g) | 32,8 | 16,6 | 49,8 | 32,8 | 16,6 |
| Acetanhydrid (g) | 260,1 | 130,1 | 390 | 260,1 | 130,1 |
| Magnesiumacetat (g) | 0,03 | 0,02 | 0,04 | 0,03 | 0,02 |
| Polyether 1 (g) | 84,3 | 168,6 | - | - | - |
| Polyether 2 (g) | - | - | 100,3 | - | - |
| Polyether 3 (g) | - | - | - | 84,3 | 168,6 |
| $\eta$rel (Lösungsviskosität) | Proben waren in allen für LCP geeigneten Lösungsmitteln nicht löslich | | | | |
| Schmelzviskosität ($T=330^{0}C$; $L/D=30:1$ = 1000 $s^{-1}$) | 5 | 12 | 12 | 5 | 10 |
| Tg ($^{0}C$) | 156 | 155 | 150 | 153 | 155 |
| $\Delta H$ (J/g) (Schmelzenthalpie) | 1,6 | 3,4 | 1,4 | 2,6 | 1,5 |
| Tm ($^{0}C$) (Schmelzpunkt) | 326 | 333 | 327 | 329 | 320 |

## Patentansprüche

1. Neue Estergruppen enthaltende aromatische Polyether der Formel

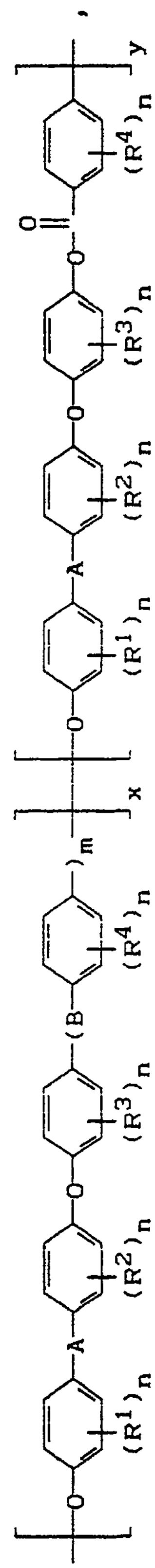

worin

$R^1$ bis $R^4$ gleich oder verschieden sind und für Halogen, Wasserstoff, $C_1$-$C_4$-Alkyl, $C_6$-$C_{12}$-Aryl oder $C_7$-$C_{12}$-Aralkyl stehen,

A für $SO_2$, CO, SO oder

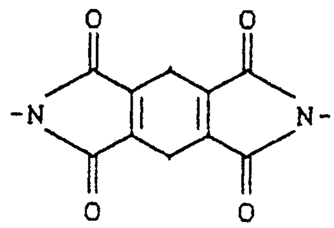

steht,

B eine chemische Bindung, CO, O, S, $SO_2$,

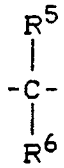

oder

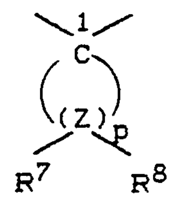

bedeutet,
worin
$R^5$ und $R^6$
gleich oder verschieden sind und für Halogen, Wasserstoff, $C_1$-$C_4$-Alkyl oder $C_5$-$C_{12}$-Cycloalkyl mit gegebenenfalls einem oder mehreren Alkylsubstituenten stehen,
p
eine ganze Zahl von 4 bis 7 ist,
$R^7$ und $R^8$
für jedes Z individuell wählbar sind und unabhängig voneinander Wasserstoff oder $C_1$-$C_6$-Alkyl bedeuten und
Z
Kohlenstoff bedeutet,
mit der Maßgabe, daß an mindestens einem Atom Z die Reste $R^7$ und $R^8$ gleichzeitig Alkyl sind,

n 0 oder eine ganze Zahl von 1 bis 4,

m 0 oder eine ganze Zahl von 1 bis 3 bedeuten und

x und y im Verhältnis von 99,5 bis 50 Gew.-Teilen zu 0,5 bis 50 Gew`-Teilen pro Gesamtpolymer zueinander stehen.

**2.** Verfahren zur Herstellung von Estergruppen enthaltenden aromatischen Polyethern der Formel

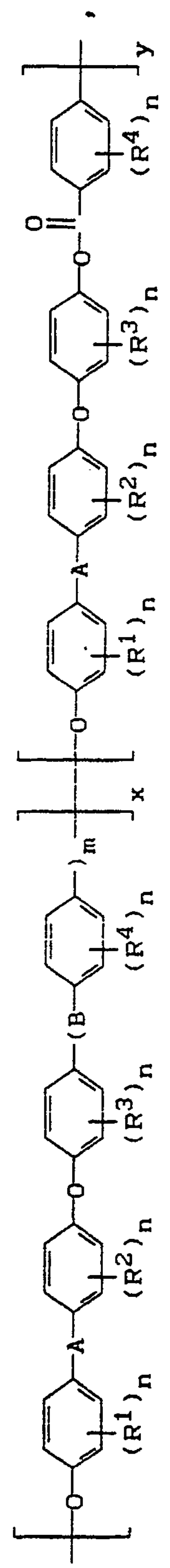

worin

| | |
|---|---|
| $R^1$ bis $R^4$ | gleich oder verschieden sind und für Halogen, Wasserstoff, $C_1$-$C_4$-Alkyl, $C_6$-$C_{12}$-Aryl oder $C_7$-$C_{12}$-Aralkyl stehen, |
| A | für $SO_2$, CO, SO oder |

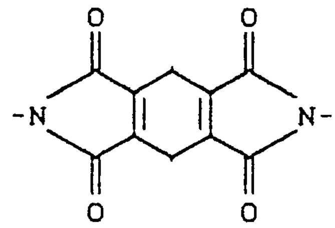

steht,

B eine chemische Bindung, CO, O, S, $SO_2$,

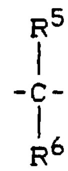

oder

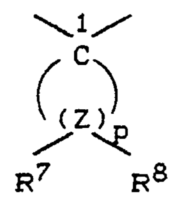

bedeutet,
worin
$R^5$ und $R^6$
gleich oder verschieden sind und für Halogen, Wasserstoff, $C_1$-$C_4$-Alkyl oder $C_5$-$C_{12}$-Cycloalkyl mit gegebenenfalls einem oder mehreren Alkylsubstituenten stehen,
p
eine ganze Zahl von 4 bis 7 ist,
$R^7$ und $R^8$
für jedes Z individuell wählbar sind und unabhängig voneinander Wasserstoff oder $C_1$-$C_6$-Alkyl bedeuten und
Z
Kohlenstoff bedeutet,
mit der Maßgabe, daß an mindestens einem Atom Z die Reste $R^7$ und $R^8$ gleichzeitig Alkyl sind,

n 0 oder eine ganze Zahl von 1 bis 4,

m 0 oder eine ganze Zahl von 1 bis 3 bedeuten und

x und y im Verhältnis von 99,5 bis 50 Gew.-Teilen zu 0,5 bis 50 Gew.-Teilen pro Gesamtpolymer zueinander stehen,

dadurch gekennzeichnet, daß aromatische Dihalogenide der Formel

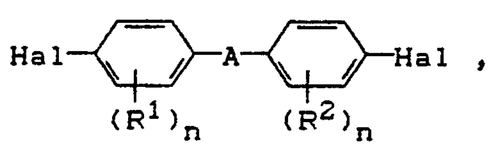

worin

$R^1$, $R^2$, A und n die zuvor genannte Bedeutung besitzen und

Hal für Fluor, Chlor oder Brom steht,

mit aromatischen Bisphenolen der allgemeinen Formel

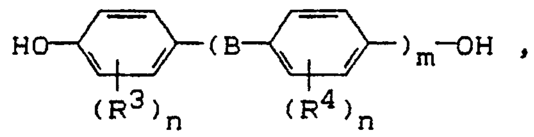

worin

$R^3$, $R^4$, B, m und n die zuvor genannte Bedeutung besitzen,

und mit aromatischen Esterbisphenolen der allgemeinen Formel

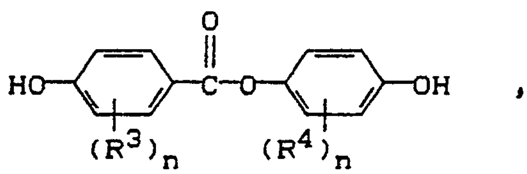

worin

$R^3$, $R^4$ und n die zuvor genannte Bedeutung besitzen,

in Gegenwart von 1 bis 1,3 Äquivalenten basischer Katalysatoren, bezogen auf Dihydroxyverbindungen, und in Gegenwart von dipolaren, aprotischen Lösungsmitteln der Formeln

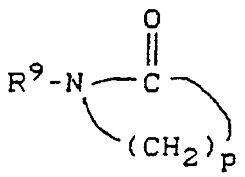 oder $R^{10}$-Q-$R^{11}$ ,

in welchen

$R^9$, $R^{10}$ und $R^{11}$ gleich oder verschieden sind und für $C_1$-$C_{20}$-Alkyl, $C_5$-$C_7$-Cycloalkyl oder $C_6$-$C_{20}$-Aryl stehen,

Q eine Sulfoxid- oder Sulfongruppe bedeutet und

p für die Zahlen 3, 4 oder 5 steht,

umgesetzt werden, wobei die Bisphenole im Verhältnis von 99,5 bis 50:0,5 bis 50 Gew.-Teilen zueinander eingesetzt werden.

**3.** Verwendung der Estergruppen enthaltenden aromatischen Polyether nach Anspruch 1 zur Herstellung von Formkörpern aller Art und zur Herstellung von Blockcopolymeren.